# EUROPEAN PATENT APPLICATION

(11) **EP 4 628 195 A1**
(43) Date of publication of application: **08.10.2025**
(21) Application number: 23897883.7
(22) Date of filing: 30.11.2023
(51) Int. Cl.: B01D 53/22

(54) **SEPARATION MEMBRANE SYSTEM**

(30) Priority: 02.12.2022 JP 2022193401; 27.01.2023 JP 2023011162
(71) Applicant: NGK Insulators, Ltd., Nagoya-shi, Aichi 467-8530 (JP)
(72) Inventor: SHIMIZU, Katsuya, Nagoya-shi, Aichi 467-8530 (JP); KOJIMA, Miyuki, Nagoya-shi, Aichi 467-8530 (JP); IIDA, Kazuki, Nagoya-shi, Aichi 467-8530 (JP); NAKAGAWA, Kosuke, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Müller-Boré & Partner Patentanwälte PartG mbB
(86) International application number: PCT/JP2023/042995
(87) International publication number: WO 2024/117237

(57) **Abstract**

Provided is a separation membrane system, which includes a separation membrane that allow a combustible gas or an incombustible gas in a mixed gas of the combustible gas and the incombustible gas to preferentially permeate therethrough to separate the mixed gas, and which can achieve effective utilization or combustion treatment of a gas in which the incombustible gas is increased in concentration (enriched) through the separation membrane. The separation membrane system according to an embodiment of the present invention is a separation membrane system configured to separate a mixed gas of a combustible gas and an incombustible gas on the basis of permeability, the separation membrane system including a separation membrane configured to allow the combustible gas or the incombustible gas to preferentially permeate therethrough to separate the mixed gas into a combustible gas-enriched gas and an incombustible gas-enriched gas, wherein the incombustible gas-enriched gas is combustible.

## Description

### Technical Field

The present invention relates to a separation membrane system.

### Background Art

Hitherto, investigations have been made on various methods for separating a useful gas from a mixed gas. For example, a method including using a separation membrane that allows a specific gas to selectively permeate therethrough has been known as one of such methods. A separation membrane system that allows a predetermined gas in a mixed gas of a combustible gas and an incombustible gas to permeate therethrough to increase the concentration of each of the combustible gas and the incombustible gas is often uneconomical because an incombustible gas-enriched gas has no application and is discarded.

### Citation List

### Patent Literature

[PTL 1] WO 2011/105511 A1

### Summary of Invention

### Technical Problem

A primary object of the present invention is to provide a separation membrane system, which includes a separation membrane that allows a combustible gas or an incombustible gas in a mixed gas of the combustible gas and the incombustible gas to preferentially permeate therethrough to separate the mixed gas, and which can achieve effective utilization of a gas in which the incombustible gas is increased in concentration (enriched) through the separation membrane.

### Solution to Problem

[1] According to an embodiment of the present invention, there is provided a separation membrane system configured to separate a mixed gas of a combustible gas and an incombustible gas on the basis of permeability, the separation membrane system including a separation membrane configured to allow the combustible gas or the incombustible gas to preferentially permeate therethrough to separate the mixed gas into a combustible gas-enriched gas and an incombustible gas-enriched gas, wherein the incombustible gas-enriched gas is combustible.
[2] The separation membrane system according to the above-mentioned item [1] may further include an impurity component-removing mechanism arranged upstream of the separation membrane.
[3] In the separation membrane system according to the above-mentioned item [1], the incombustible gas-enriched gas may contain nitrogen.
[4] In the separation membrane system according to the above-mentioned item [2], the incombustible gas-enriched gas may contain nitrogen.
[5] In the separation membrane system according to any one of the above-mentioned items [1] to [4], the incombustible gas in the incombustible gas-enriched gas may contain nitrogen as a main component.
[6] In the separation membrane system according to any one of the above-mentioned items [1] to [5], the incombustible gas-enriched gas may be used for temperature control of the separation membrane.
[7] In the separation membrane system according to any one of the above-mentioned items [1] to [6], the incombustible gas-enriched gas may be used for heating of another separation membrane.
[8] In the separation membrane system according to any one of the above-mentioned items [1] to [7], part of the mixed gas may be used for temperature control of the separation membrane.
[9] In the separation membrane system according to any one of the above-mentioned items [1] to [8], the combustible gas-enriched gas may be used for temperature control of the separation membrane.

### Advantageous Effects of Invention

According to the embodiment of the present invention, the separation membrane system, which includes a separation membrane that allows a combustible gas or an incombustible gas in a mixed gas of the combustible gas and the incombustible gas to preferentially permeate therethrough to separate the mixed gas, and which can achieve effective utilization of a gas in which the incombustible gas is increased in concentration (enriched) through the separation membrane, can be provided.

### Brief Description of Drawings

FIGS. **1** are explanatory views for illustrating the outline of a separation membrane system according to one embodiment of the present invention.
FIGS. **2** are explanatory views for illustrating the outline of the separation membrane system according to one embodiment of the present invention.
FIG. **3** is an explanatory view for illustrating the schematic configuration of a separation membrane complex in one embodiment of the present invention.
FIG. **4** is a schematic cross-sectional view for illustrating the configuration of the separation membrane complex in one embodiment of the present invention.

### Description of Embodiments

### A. Outline of Separation Membrane System

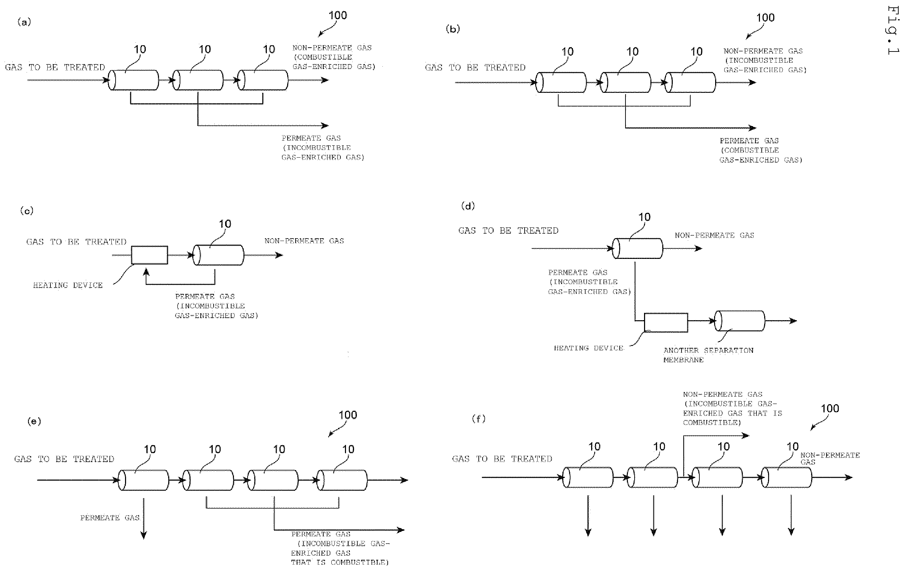

FIGS. **1** are explanatory views for illustrating the outline of a separation membrane system according to one embodiment of the present invention. A separation membrane system **100** is configured to separate a mixed gas of a combustible gas and an incombustible gas on the basis of permeability. The separation membrane system **100** includes a separation membrane. The separation membrane allows the combustible gas or the incombustible gas to preferentially permeate therethrough to separate the mixed gas into a combustible gas-enriched gas and an incombustible gas-enriched gas. In one embodiment, the separation membrane may form a separation membrane complex **10.**

In one embodiment, a separation membrane that allows an incombustible gas to preferentially permeate therethrough is used as the separation membrane (FIG. **1(a)**). In this embodiment, the concentration of the incombustible gas in a gas that has permeated through the separation membrane (hereinafter sometimes referred to as "permeate gas") is higher than the concentration of the incombustible gas in the mixed gas before contact with the separation membrane (hereinafter sometimes referred to as "gas to be treated"). Meanwhile, in the separation membrane system, the concentration of the incombustible gas in a gas that has not permeated through the separation membrane (hereinafter sometimes referred to as "non-permeate gas") is lower than the concentration of the incombustible gas in the gas to be treated. In addition, in this the embodiment, in the separation membrane system, the concentration of the combustible gas in the non-permeate gas is higher than the concentration of the combustible gas in the gas to be treated. The non-permeate gas may have combustibility. Herein, a gas having an incombustible gas concentration higher than that of the gas to be treated (the mixed gas of the combustible gas and the incombustible gas before contact with the separation membrane) is referred to as "incombustible gas-enriched gas." In this embodiment, the permeate gas is the "incombustible gas-enriched gas." In addition, the gas having a high combustible gas concentration is referred to as "combustible gas-enriched gas." In this embodiment, the non-permeate gas is the "combustible gas-enriched gas."

In another embodiment, a separation membrane that allows a combustible gas to preferentially permeate therethrough is used as the separation membrane (FIG. **1(b)**). In this embodiment, the concentration of the incombustible gas in the non-permeate gas is higher than the concentration of the incombustible gas in the gas to be treated. Meanwhile, the concentration of the incombustible gas in the permeate gas is lower than the concentration of the incombustible gas in the gas to be treated. In addition, in this embodiment, the concentration of the combustible gas in the permeate gas is higher than the concentration of the combustible gas in the gas to be treated. The permeate gas may have combustibility. In this embodiment, the non-permeate gas is the "incombustible gas-enriched gas." In addition, the permeate gas is the "combustible gas-enriched gas."

In one embodiment, the separation membrane system includes an impurity component-removing mechanism as pretreatment equipment upstream of the separation membrane. An impurity component may be a solid component, a liquid component, or a gas component. When a heating device is arranged as described later, the removing mechanism may be arranged upstream or downstream of the heating device.

The gas to be treated is, for example, a mixed gas containing hydrogen, helium, nitrogen, oxygen, carbon monoxide, carbon dioxide, a nitrogen oxide, ammonia, a sulfur oxide, hydrogen sulfide, sulfur fluoride, mercury, arsine, hydrogen cyanide, carbonyl sulfide, a C1 to C8 hydrocarbon, an organic acid, an alcohol, a mercaptan, an ester, an ether, a ketone, or an aldehyde. Herein, the term "combustible gas" refers to a gas having combustibility in the presence of oxygen. Examples of the combustible gas include a hydrocarbon gas (e.g., methane, ethane, propane, butane, or ethylene), hydrogen, and carbon monoxide. Examples of the incombustible gas include nitrogen and carbon dioxide. In one embodiment, nitrogen is used as the incombustible gas. In addition, an incombustible gas containing nitrogen as a main component may be used. Herein, the term "main component" means a component having the highest concentration among incombustible gas components. In the above-mentioned mixed gas, a mixing ratio between the combustible gas and the incombustible gas may be set to any appropriate mixing ratio. In one embodiment, the above-mentioned separation membrane system is used as purification means for a natural gas (e.g., a mixed gas of nitrogen and a hydrocarbon).

In the separation membrane system, the incombustible gas-enriched gas is turned into a gas that is combustible. The embodiment of the present invention has such a configuration that the incombustible gas-enriched gas is produced but the gas is made combustible. Thus, the incombustible gas-enriched gas can be effectively utilized. Typically, the incombustible gas-enriched gas serving as an exhaust gas can be subjected to combustion treatment. As a result, the disposal cost of the incombustible gas-enriched gas can be reduced. In addition, the incombustible gas-enriched gas may be used for the temperature control of the separation membrane (details thereof are described later). In one embodiment, on the basis of the configuration of the separation membrane itself, the incombustible gas-enriched gas is turned into a gas that is combustible, that is, the incombustible gas-enriched gas is turned into a gas that is combustible without introduction of another combustible gas different from the incombustible gas-enriched gas. The phrase "gas is combustible" means that the gas is made combustible at room temperature under atmospheric pressure in the presence of a combustion-supporting gas (without additional introduction of a combustible gas), and preferably means that the gas is made combustible at room temperature under atmospheric pressure by mixing air.

The above-mentioned incombustible gas-enriched gas may be used outside the separation membrane system after storage or the like, or may be used inside the separation membrane system. In one embodiment, the separation membrane system includes combusting the incombustible gas-enriched gas.

In one embodiment, the incombustible gas-enriched gas is used for the temperature control of the separation membrane (FIG. **1(c)**)**.** The separation membrane of this embodiment to be subjected to the temperature control may be a separation membrane used in the production of the incombustible gas-enriched gas. The separation precision of the separation membrane varies depending on temperatures. Accordingly, the composition of the incombustible gas-enriched gas can be controlled so as to be combustible by appropriately performing the temperature control. In one embodiment, the gas to be treated is heated by the heated incombustible gas-enriched gas, and thus the temperature control of the separation membrane is performed. It is preferred that the gas to be treated be heated by heat obtained by combusting the incombustible gas-enriched gas in the presence of a combustion-supporting gas. The whole of the produced incombustible gas-enriched gas may be used for the temperature control, or part thereof may be used for the temperature control. Another heating device (e.g., an electric heater) may be arranged upstream of the separation membrane. In this case, the heat obtained by combusting the incombustible gas-enriched gas may be used to reduce a load on the heating device.

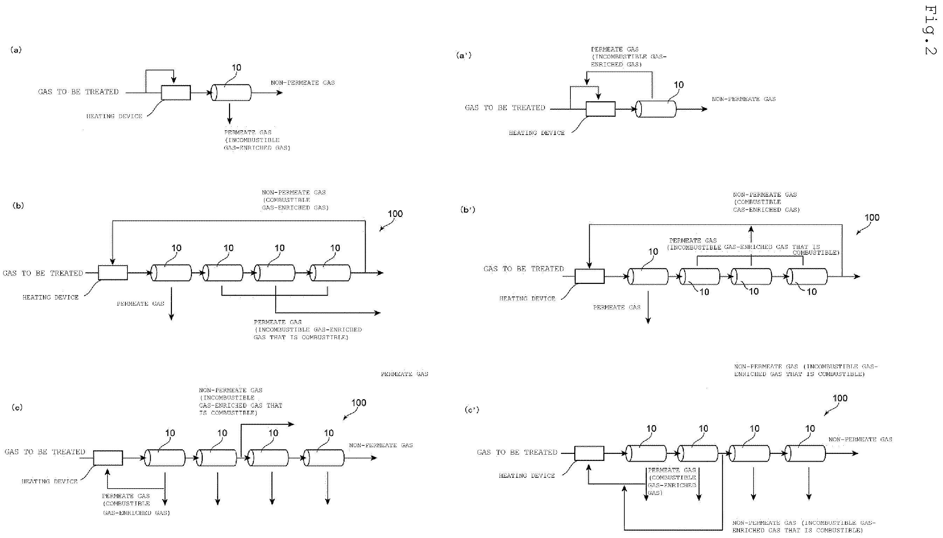

In one embodiment, the gas to be treated (the mixed gas of the combustible gas and the incombustible gas before contact with the separation membrane) and/or the combustible gas-enriched gas is used for the temperature control of the separation membrane. Typically, as illustrated in FIGS. **2****,** the gas to be treated is heated by the gas obtained by heating part of the gas to be treated and/or the combustible gas-enriched gas, and thus the temperature control of the separation membrane is performed. It is preferred that the gas to be treated be heated by heat obtained by combusting part of the gas to be treated and/or the combustible gas-enriched gas in the presence of a combustion-supporting gas. FIG. **2(a)** is an illustration of an embodiment in which part of the gas to be treated is combusted to heat the gas to be treated. FIG. **2(b)** is an illustration of an embodiment in which part of the combustible gas-enriched gas serving as the non-permeate gas is combusted to heat the gas to be treated. In addition, FIG. **2(c)** is an illustration of an embodiment in which part of the combustible gas-enriched gas serving as the permeate gas is combusted to heat the gas to be treated.

In addition, as illustrated in FIG. **2****(a')** to FIG. **2****(c'),** a gas obtained by mixing the incombustible gas-enriched gas, and the gas to be treated and/or the combustible gas-enriched gas may be used for the temperature control of the separation membrane.

In one embodiment, the incombustible gas-enriched gas is used for the heating of another separation membrane (FIG. **1(d)**). In this embodiment, the incombustible gas-enriched gas may be used at the time of the starting of a device including the separation membrane (at the time of the increase in temperature thereof) in addition to the temperature control of the separation membrane at the time of the expression of separation performance. The other separation membrane may be a separation membrane inside the above-mentioned separation membrane system or a separation membrane outside the separation membrane system. For example, in JP 2009-039654 A, there is a disclosure of a system that prevents condensation on a membrane surface under heating at the time of the starting of a separation membrane, and in JP 6500499 B2, there is a disclosure of a system that dries a separation membrane under heating. The whole of the produced incombustible gas-enriched gas may be used for the heating of the other separation membrane, or part thereof may be used for the heating of the other separation membrane.

In one embodiment, the above-mentioned separation membrane system includes combusting the incombustible gas-enriched gas that has been used for the heating of the separation membrane (or the other separation membrane) as describe above. The separation membrane may be heated by supplying the heated incombustible gas-enriched gas to the separation membrane, or by heat obtained by combusting part of the incombustible gas-enriched gas in the presence of a combustion-supporting gas. According to such embodiment, the incombustible gas-enriched gas can be more effectively utilized.

In one embodiment, the incombustible gas-enriched gas contains nitrogen. In addition, the incombustible gas in the incombustible gas-enriched gas may contain nitrogen as a main component. Herein, the term "main component" means a component having the highest concentration among components of the incombustible gas.

It is not required that the heating of the separation membrane be performed on the uppermost stream of the separation membranes arranged in series, and the heating may be performed on the middle of the series, though such configuration is not illustrated.

A separation membrane complex may be configured to have a cylindrical shape. When the gas to be treated is introduced at a predetermined gas introduction pressure (e.g., 0.5 MPa or more) into the inside of the cylindrical structure of the separation membrane complex, a gas that permeates through the separation membrane complex (substantially the separation membrane) can be delivered from the surface of the separation membrane complex, and a gas that does not permeate through the separation membrane complex can be passed in the longitudinal direction of the cylindrical separation membrane complex. As a result, the mixed gas can be separated. The separation membrane complex may include a single cylindrical structure or a plurality of cylindrical structures. The separation membrane complex preferably includes a plurality of cylindrical cells extending in the longitudinal direction.

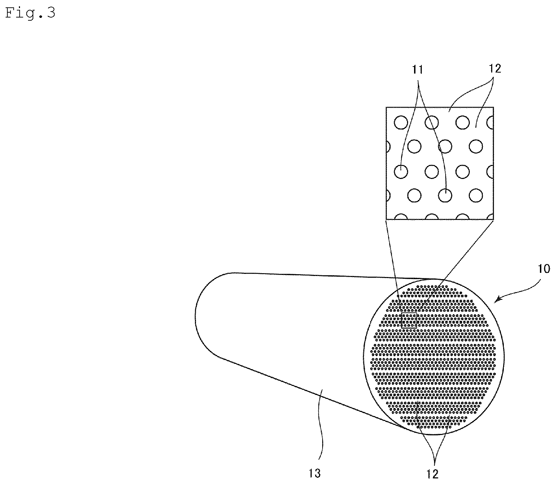

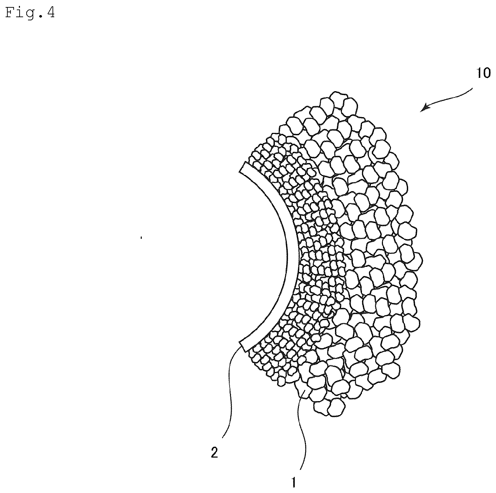

FIG. **3** is an explanatory view for illustrating the schematic configuration of a separation membrane complex in one embodiment of the present invention. FIG. **4** is a schematic cross-sectional view for illustrating the configuration of a separation membrane complex in one embodiment of the present invention. The separation membrane complex **10** has a plurality of cells **11** formed therein. The cells **11** are each formed in a cylindrical shape extending in the longitudinal direction of the separation membrane complex **10.** The cells **11** may serve as a flow path for the gas to be treated. The separation membrane complex **10** includes a porous substrate **1** and a separation membrane **2** arranged on the porous substrate **1.** The separation membrane **2** may be arranged so as to cover approximately the entire inside surface of the porous substrate **1.** Of the gas to be treated that is passed through the cells **11,** a gas having high permeability through the separation membrane **2** (permeate gas) permeates through the separation membrane complex **10** and is delivered from the side surface **13** of the separation membrane complex **10.** Meanwhile, a gas having low permeability through the separation membrane **2** (non-permeate gas) is passed through the flow paths of the cells **11** and delivered. The above-mentioned separation membrane complex may be used by being housed in any appropriate outer cylinder, though the outer cylinder is not illustrated.

The length of the separation membrane complex is, for example, from 10 cm to 200 cm. The outer diameter of the separation membrane complex is, for example, from 0.5 cm to 30 cm. The distance between the central axes of adjacent cells is, for example, from 0.3 mm to 10 mm. The inner diameter of each of the cells is, for example, from 1 mm to 10 mm.

The separation membrane system **100** may include a plurality of separation membrane complexes **10.** The plurality of separation membrane complexes **10** may be arranged in series, in parallel, or in combination of series and parallel. When the separation membrane complexes **10** are arranged in parallel, the separation membrane complexes **10** arranged in parallel may or may not be operated simultaneously. In one embodiment, a separation membrane complex to be operated for gas separation and a separation membrane complex used for the regeneration of a separation membrane as described above are arranged in parallel. In addition, a gas that is combustible may be obtained individually from the plurality of separation membrane complexes **10,** or a gas that is combustible may be obtained collectively from the plurality of separation membrane complexes **10,** as illustrated in FIGS. **1****.**

In one embodiment, there is provided a method of separating a mixed gas of a combustible gas and an incombustible gas through use of the above-mentioned separation membrane system. The method is a gas separation method for separating a mixed gas of a combustible gas and an incombustible gas on the basis of permeability. The method includes separating the mixed gas into a combustible gas-enriched gas and an incombustible gas-enriched gas through the separation membrane that allows the combustible gas or the incombustible gas to preferentially permeate therethrough. The incombustible gas-enriched gas is combustible.

### B. Separation Membrane

As described above, the separation membrane allows any one of the combustible gas or the incombustible gas in the gas to be treated (the mixed gas of the combustible gas and the incombustible gas) to preferentially permeate therethrough. Typically, the mixed gas is separated by a difference in permeability through a separation membrane having fine pores. For example, the gas to be treated is separated into a permeate gas and a non-permeate gas by a so-called molecular sieve effect that gas permeability is controlled depending on the molecular size of the gas and the pore diameter of the separation membrane.

The separation membrane is preferably an inorganic membrane. A material for forming the separation membrane is, for example, zeolite, alumina, titania, silica, cordierite, zirconia, or mullite.

In one embodiment, a zeolite membrane is used as the above-mentioned separation membrane. The zeolite membrane includes a membrane formed from zeolite on the surface of the porous substrate. The zeolite membrane may contain two or more kinds of zeolites different from each other in structure or composition.

For example, the following zeolites may each be used as the zeolite for forming the zeolite membrane: zeolite in which an atom (T atom) positioned on the center of an oxygen tetrahedron (TO₄) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAU-type, RHO-type, SAT-type, and SOD-type zeolites. The maximum number of members in the ring of the zeolite is preferably 12 or less, more preferably 10 or less, still more preferably 8 or less. In addition, the number is preferably 6 or more, more preferably 8 or more.

The zeolite membrane contains, for example, Si. The zeolite membrane may contain, for example, any two or more of Si, Al, and P. The zeolite membrane may contain an alkali metal. The alkali metal is, for example, sodium (Na) or potassium (K). When the zeolite membrane contains a Si atom and an Al atom, a Si/Al ratio in the zeolite membrane is, for example, 1 or more and 100,000 or less. The Si/Al ratio is a molar ratio of a Si element to an Al element in the zeolite membrane. The Si/Al ratio is preferably 5 or more, more preferably 20 or more, still more preferably 100 or more. The ratio is preferably as high as possible. The Si/Al ratio in the zeolite membrane may be adjusted by adjusting, for example, a blending ratio between a Si source and an Al source in a starting material solution described later.

The average pore diameter of the separation membrane is, for example, from 0.2 nm to 1 nm, more preferably from 0.3 nm to 0.5 nm. The pore diameter of the separation membrane may be adjusted in accordance with desired composition of a permeate gas. A separation membrane having a smaller average pore diameter has higher selectivity. The average pore diameter of the separation membrane is smaller than the average pore diameter of the porous substrate. When the separation membrane is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>.

The thickness of the separation membrane is, for example, from 0.05 µm to 30 µm, preferably from 0.1 µm to 20 µm, more preferably from 0.5 µm to 10 µm. A thicker separation membrane has higher selectivity. A thinner separation membrane increases a permeation rate.

The surface roughness (Ra) of the separation membrane is, for example, 5 µm or less, preferably 2 µm or less, more preferably 1 µm or less, still more preferably 0.5 µm or less. Herein, the surface roughness (Ra) is an arithmetic surface roughness Ra measured in conformity with JIS B 0601.

The separation membrane may be formed by any appropriate method in accordance with a material for forming the membrane. For example, the zeolite membrane may be obtained by: applying zeolite serving as a seed crystal onto a porous substrate; immersing the porous substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

In one embodiment, the combustibility of the incombustible gas-enriched gas, that is, the composition of each of the permeate gas and the non-permeate gas may be controlled, for example, by adjusting the separation precision (gas selectivity) on the basis of the temperature of the separation membrane through use of the separation membrane having a configuration corresponding to the gas to be treated. In one embodiment, when the temperature of the separation membrane is increased, the incombustible gas concentration of the incombustible gas-enriched gas serving as the permeate gas may be decreased. For example, when a DDR-type zeolite membrane described in WO 2011/105511 A1 is used, the carbon dioxide concentration of a permeate gas containing carbon dioxide (incombustible gas) may be decreased.

In addition, an incombustible gas-enriched gas that is combustible may be obtained with a plurality of separation membrane complexes different from each other in gas permeability by mixing the incombustible gas-enriched gases serving as permeate gases or non-permeate gases delivered from the respective separation membrane complexes. When a plurality of separation membrane complexes are used, an incombustible gas-enriched gas that is combustible may be obtained by mixing permeate gases or non-permeate gases delivered from some of the separation membrane complexes (FIG. **1(e)** and FIG. **1(f)**), or an incombustible gas-enriched gas that is combustible may be obtained by mixing permeate gases or non-permeate gases delivered from all the separation membrane complexes.

### C. Porous Substrate

The porous substrate is configured to allow a gas to permeate therethrough. In the example illustrated in FIG. **3****,** the porous substrate **1** is a so-called monolith-type substrate in which an integrally-molded continuous columnar body has formed therein a plurality of through holes each extending in the longitudinal direction. In the example illustrated in FIG. **3****,** the porous substrate **1** has an approximately columnar shape. The cross-section perpendicular to the longitudinal direction of each of the through holes has, for example, an approximately circular shape. The separation membrane may be formed on the inside surfaces of the through holes to form a separation membrane complex (porous substrate/separation membrane) having cells formed therein. The shape of the porous substrate is not limited to the above-mentioned examples, and may be, for example, a honeycomb shape, a plate-like shape, a tubular shape, a cylindrical shape, a columnar shape, or a polygonal prism shape. In one embodiment, the separation membrane may be formed on the outside surface of a tubular porous substrate.

The length of the porous substrate is, for example, from 10 cm to 200 cm. The outer diameter of the porous substrate is, for example, from 0.5 cm to 30 cm. When the porous substrate has through holes, the distance between the central axes of adjacent through holes is, for example, from 0.3 mm to 10 mm. When the porous substrate has a tubular shape or a cylindrical shape, the thickness of the porous substrate is, for example, from 0.1 mm to 10 mm.

Any appropriate material is used as a material for the porous substrate. In one embodiment, the porous substrate is formed from a ceramic sintered compact. Examples of the ceramic sintered compact selected as the material for the porous substrate include alumina, silica, mullite, zirconia, titania, yttria, silicon nitride, and silicon carbide.

The porous substrate may contain an inorganic binding material. At least one of titania, mullite, easily sinterable alumina, silica, glass frit, clay mineral, or easily sinterable cordierite may be used as the inorganic binding material.

The porous substrate may have a single-layer configuration or a multilayer configuration. In one embodiment, the porous substrate has a multilayer structure of layers having different pore diameters as illustrated in FIG. **4****.** It is preferred that the pore diameter of the layer closer to the inside (i.e., a separation membrane side) be smaller.

The average pore diameter of the porous substrate is, for example, from 0.01 µm to 70 µm, preferably from 0.05 µm to 25 µm. The average pore diameter of the porous substrate on the separation membrane side is from 0.01 µm to 1 µm, preferably from 0.05 µm to 0.5 µm. With regard to the distribution of the pore diameters in the whole including the surface and inside of the porous substrate, D5 is, for example, from 0.01 µm to 50 µm, D50 is, for example, from 0.05 µm to 70 µm, and D95 is, for example, from 0.1 µm to 2,000 µm. The porosity of the porous substrate on the separation membrane side is, for example, from 25% to 50%. The average pore diameter of the porous substrate may be measured with a mercury porosimeter, a perm porometer, a nano-perm porometer, or the like.

### Industrial Applicability

The separation membrane system of the present invention can be suitably used in a process of separating components in a mixed gas.

### Reference Signs List

- **1**: porous substrate
- **2**: separation membrane
- **10**: separation membrane complex

## Claims

1. A separation membrane system configured to separate a mixed gas of a combustible gas and an incombustible gas on the basis of permeability,
the separation membrane system comprising a separation membrane configured to allow the combustible gas or the incombustible gas to preferentially permeate therethrough to separate the mixed gas into a combustible gas-enriched gas and an incombustible gas-enriched gas,
wherein the incombustible gas-enriched gas is combustible.

2. The separation membrane system according to claim 1, further comprising an impurity component-removing mechanism arranged upstream of the separation membrane.

3. The separation membrane system according to claim 1, wherein the incombustible gas-enriched gas contains nitrogen.

4. The separation membrane system according to claim 2, wherein the incombustible gas-enriched gas contains nitrogen.

5. The separation membrane system according to any one of claims 1 to 4, wherein the incombustible gas in the incombustible gas-enriched gas contains nitrogen as a main component.

6. The separation membrane system according to any one of claims 1 to 4, wherein the incombustible gas-enriched gas is used for temperature control of the separation membrane.

7. The separation membrane system according to any one of claims 1 to 4, wherein the incombustible gas-enriched gas is used for heating of another separation membrane.

8. The separation membrane system according to any one of claims 1 to 4, wherein part of the mixed gas is used for temperature control of the separation membrane.

9. The separation membrane system according to any one of claims 1 to 4, wherein the combustible gas-enriched gas is used for temperature control of the separation membrane.
